(19) Europäisches Patentamt
European Patent Office
Office européen des brevets

(11) Veröffentlichungsnummer: **0 331 952 B1**

(12) **EUROPÄISCHE PATENTSCHRIFT**

(45) Veröffentlichungstag der Patentschrift: **28.04.93**

(51) Int. Cl.$^5$: **B01D 19/04**, C08G 77/46, C09D 5/02

(21) Anmeldenummer: **89102847.4**

(22) Anmeldetag: **18.02.89**

# (54) Verfahren zum Entschäumen wässriger Dispersionen polymerer organischer Substanzen durch Zusatz von Polyoxyalkylen-Polysiloxan-Blockmischpolymerisaten.

(30) Priorität: **05.03.88 DE 3807247**

(43) Veröffentlichungstag der Anmeldung:
**13.09.89 Patentblatt 89/37**

(45) Bekanntmachung des Hinweises auf die Patenterteilung:
**28.04.93 Patentblatt 93/17**

(84) Benannte Vertragsstaaten:
**AT BE DE ES FR GB IT NL SE**

(56) Entgegenhaltungen:
**EP-A- 0 036 597** **EP-A- 0 049 834**
**EP-A- 0 049 836** **DE-A- 2 241 171**
**DE-A- 2 659 252** **DE-A- 3 123 103**
**US-A- 4 042 528**

(73) Patentinhaber: **Th. Goldschmidt AG**
**Goldschmidtstrasse 100 Postfach 101461**
**W-4300 Essen 1(DE)**

(72) Erfinder: **Berger, Roland, Dr.**
**Spelbergs Busch 6**
**W-4630 Bochum 6(DE)**
Erfinder: **Fink, Hans-Ferdi**
**Brasserstrasse 46**
**W-4300 Essen 1(DE)**
Erfinder: **Klocker, Otto**
**Überruhrstrasse 420**
**W-4300 Essen 14(DE)**
Erfinder: **Sucker, Roland**
**Berliner Strasse 69**
**W-4712 Werne(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 331 952 B1

## Beschreibung

Die Verwendung von Siliconölen, insbesondere Methylpolysiloxanen niedriger bis mittlerer Viskosität, für die Entschäumung wäßriger Lösungen oder Dispersionen ist bekannt und z.B. in dem Buch W. Noll "Chemie und Technologie der Silicone", 1968, Seite 540 ff. beschrieben.

Die Verbesserung der entschäumenden Wirkung von kohlenstofforganischen oder siliciumorganischen Entschäumern durch Zusatz hochdisperser anorganischer oder organischer Substanzen, insbesondere hochdisperser, in der Regel pyrogen erzeugter Kieselsäure und hochdispersen Aluminiumoxids ist ebenfalls literaturbekannt und beispielsweise in der DE-C-10 67 003 und der DE-A- 19 14 684 erwähnt.

Es ist ebenfalls bekannt, Polyoxyalkylen-Polysiloxan-Blockmischpolymerisate als Entschäumungsmittel zu verwenden. So ist beispielsweise in der DE-C- 10 12 602 angegeben, daß wasserlösliche Blockmischpolymerisate der allgemeinen Formel

$$R'(R_2SiO)_y]_a[(C_nH_{2n}O)_x]_bR''$$

worin R' und R'' einwertige Kohlenwasserstoffe oder Kohlenwasserstoffoxyreste darstellen, y eine ganze Zahl von mindestens 2, n eine ganze Zahl von 2 bis 4, x mindestens 5 und die Summe von a und b gleich 2 oder 3 ist, u.a. als Antischaummittel eingesetzt werden können. Die in der DE-C- 10 12 602 beschriebenen Polyoxyalkylen-Polysiloxan-Blockmischpolymerisate können dabei die Struktur A'B'A' aufweisen, wobei mit A' die Polyoxyalkylenblöcke und mit B' ein Polysiloxanblock bezeichnet ist.

Man hat später erkannt, daß Polyoxyalkylen-Polysiloxan-Blockmischpolymerisate dieses Typs in ihren entschäumenden Eigenschaften noch wesentlich verbessert werden können, wenn die Blockmischpolymerisate wasserunlöslich sind.

In der DE-A- 24 43 853 ist eine Zubereitung zur Entschäumung wäßriger Lösungen oder Dispersionen beschrieben, welche aus
0,2 bis 7,5 Gew.-% hochdisperser Kieselsäure oder hochdispersen Aluminiumoxids und
92,5 bis 99,8 Gew.-% eines Methylpolysiloxan-Polyoxyalkylen-Blockmischpolymerisates, welches 10 bis 60 Gew.-% Methylpolysiloxan enthält und dessen Polyoxyalkylenblock > 80 bis 100 Gew.-% Oxypropyleneinheiten aufweist,
besteht. Die in dieser DE-A näher beschriebenen Polyoxyalkylen-Polysiloxan-Blockmischpolymerisate können ebenfalls die Struktur A'B'A' aufweisen.

In der US-A- 4 028 218 ist ein Verfahren zum Verhindern bzw. Zerstören von Schaum in wäßrigen Lösungen oder Dispersionen beschrieben, wobei man sich einer ähnlichen Zubereitung, wie sie in der DE-A- 24 43 853 beschrieben ist, bedient. Die Zubereitung unterscheidet sich im wesentlichen durch einen zusätzlichen Gehalt an organischem Öl, welches ebenfalls entschäumend wirkt. Geeignete organische Öle sind die Ester von Alkoholen und Fettsäuren, wie z.B. pflanzliche oder tierische Öle oder Mineralöle, Polybutadienöle oder Polypropylenglykole.

Der US-A- 4 028 218 vergleichbar ist in der DE-A- 31 23 103 die Verwendung eines von mineralischen Oxiden freien Gemisches aus

A) 1 - 20 Gew.-% mindestens eines Polydimethylsiloxan-Polyoxyalkylen-Blockpolymerisates, das zu 10 bis 60, vorzugsweise 15 bis 40 Gew.-% aus Methylsiloxaneinheiten und zu 90 bis 40, vorzugsweise 85 bis 60 Gew.-% aus Oxyalkyleneinheiten besteht, wobei die Oxyalkyleneinheiten zu 75 bis 100 % aus Oxypropyleneinheiten und zu 0 bis 25 % aus Oxyethyleneinheiten bestehen,

B) 99 - 80 Gew.-% mindestens eines neutralen Carbonsäureesters aus gesättigten oder ungesättigten, geradkettigen oder verzweigten, 4 bis 12 Kohlenstoffatome aufweisenden Mono- oder Dicarbonsäuren und verzweigten, 4 bis 12 Kohlenstoffatome aufweisenden Monoalkoholen als Entschäumer in wäßrigen Kunstharzdispersionen.

Die in einer Menge von 1 bis 20 Gew.-% in dem Gemisch enthaltenen Polyoxyalkylen-Polysiloxan-Blockmischpolymerisate können dabei die Struktur $A'-[B'-A']_z$ aufweisen, wobei z einen Wert von 1 bis 3 annehmen kann.

Diese aus dem Stand der Technik bekannten Siliconöle oder Polyoxyalkylen-Polysiloxan-Blockmischpolymerisate enthaltenden Zubereitungen sind in mehr oder weniger ausgeprägtem Umfang geeignet, die Schaumbildung von wäßrigen Lösungen oder wäßrigen Dispersionen organischer Substanzen zu verhindern oder bereits gebildeten Schaum zu zerstören. Es hat sich jedoch gezeigt, daß mit derartigen Zubereitungen versetzte wäßrige Dispersionen polymerer organischer Substanzen durch den Zusatz solcher Entschäumungsmittel anwendungstechnische Nachteile aufweisen, welche auf den Zusatz dieser Entschäumungsmittel zurückzuführen sind. Es hat sich insbesondere gezeigt, daß Dispersionen von Bindemitteln, Beschichtungsmitteln und Klebemitteln, welchen zur Entschäumung Polysiloxane oder Polyoxyalkylen-Polysiloxan-Blockmischpolymerisate zugesetzt worden sind, beim Aufbringen auf Oberflächen Benetzungsfehler aufweisen. Diese Benetzungsfehler treten insbesondere bei wäßrigen Dispersionen von Polyurethanen auf. Diese Benetzungsfehler zeigen sich in ungleichmäßiger Benetzung des Untergrundes und führen zur Ausbildung von Beschichtungen ungleichmäßiger Dicke und im Grenzfall zu Beschichtungen, welche Fehlstellen unterschiedlicher Größe aufweisen.

Der vorliegenden Erfindung liegt die Aufgabe zugrunde, geeignete Polyoxyalkylen-Polysiloxan-Blockmischpolymerisate aufzufinden, welche in wäßrigen Dispersionen polymerer organischer Substanzen, insbesondere Dispersionen von Binde-, Beschichtungs- und Klebmitteln, gute entschäumende Wirkung zeigen, gleichzeitig aber keine Benetzungsstörungen beim Auftrag dieser Dispersionen auf eine Oberfläche verursachen.

Diese der Erfindung zugrunde liegende Aufgabe kann überraschenderweise dadurch gelöst werden, daß man bei dem vorgenannten Verfahren als Polyoxyalkylen-Polysiloxan-Blockmischpolymerisate solche der allgemeinen Formel

$R^1O\text{-}A\text{-}[B\text{-}A\text{-}]_mR^1$

wobei

A ein Polyoxyalkylenblock der durchschnittlichen Formel $(C_nH_{2n}O\text{-})_y$ ist, in der n einen Wert von 2,8 bis 4,0 und y einen Wert von 15 bis 100 hat,

B ein Polysiloxanblock der durchschnittlichen Formel

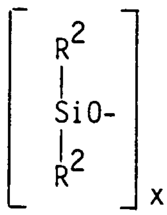

ist, wobei $R^2$ gleich oder verschieden ist und einen Alkylrest mit 1 bis 4 Kohlenstoffatomen oder einen Phenylrest bedeutet, jedoch mindestens 90 % der Reste $R^2$ Methylreste sind und x einen Wert von 10 bis 100 hat,

$R^1$ gleich oder verschieden ist und einen Wasserstoff- oder Alkylrest mit 1 bis 4 Kohlenstoffatomen bedeutet und

m einen Wert von 4 bis 20 hat,

in Mengen von 0,01 bis 2,0 Gew.-%, bezogen auf zu entschäumende Dispersion, verwendet.

Der Polyoxyalkylenblock A entspricht der durchschnittlichen Formel $(C_nH_{2n}O\text{-})_y$. n hat dabei einen Wert von 2,8 bis 4,0 und ergibt sich aus der gleichzeitigen Anwesenheit von Oxyethylen-, Oxypropylen- und/oder Oxybutyleneinheiten. Der Zahlenwert von 2,8 ist bei einem Polyoxyalkylenblock zu finden, der sich zu 20 Mol-% aus Oxyethylen- und 80 Mol-% Oxypropyleneinheiten zusammensetzt. Er ergibt sich jedoch auch durch geeignete Mengen von Oxyethylen- und Oxypropylen- bzw. Oxyethylen-, Oxypropylen- und Oxybutyleneinheiten. Hat n den Wert 4,0, besteht der Polyoxyalkylenblock nur aus Oxybutyleneinheiten. Vorzugsweise hat n einen durchschnittlichen Wert von 2,8 bis 3,5.

Die unterschiedlichen Oxyalkyleneinheiten mit n = 2, 3 oder 4 können innerhalb der Polyoxyalkylenblöcke statistisch oder blockweise verteilt angeordnet sein. Dabei ist die Verteilung in einzelnen Blöcken bevorzugt.

Der Index y gibt die Gesamtzahl der Oxyalkyleneinheiten an.

Der Polysiloxanblock B entspricht der durchschnittlichen Formel

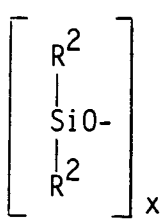

Die Anzahl dieser difunktionellen Einheiten wird durch den Index x gegeben. x hat einen Wert von 10 bis 100, vorzugsweise von 15 bis 70.

$R^2$ kann innerhalb des Polysiloxanblocks gleiche oder unterschiedliche Bedeutung haben. $R^2$ kann ein Alkylrest mit 1 bis 4 Kohlenstoffatomen oder ein Phenylrest sein. Beispiele für Reste $R^2$ sind der Methyl-, Ethyl-, Propyl-, n-Butyl- und i-Butylrest. Mindestens 90 % der Reste $R^2$ sollen jedoch Methylreste sein, wobei solche Polysiloxanblöcke bevorzugt sind, bei denen alle Reste $R^2$ Methylreste sind.

$R^1$ kann innerhalb des durchschnittlichen Moleküls gleich oder verschieden sein. Die Endgruppen $R^1$ sind dabei Wasserstoff- oder Alkylreste mit 1 bis 4 Kohlenstoffatomen. Vorzugsweise ist $R^1$ ein Wasserstoffrest. Hat $R^1$ die Bedeutung eines Alkylrestes, ist der Butylrest bevorzugt.

Von besonderer Bedeutung für die Charakterisierung der erfindungsgemäß zu verwendenden Blockmischpolymerisate ist der Index m, welcher einen Wert von 4 bis 20, vorzugsweise 4 bis 15 hat. Wie sich aus den Vergleichsbeispielen ergibt, besteht Grund zu der Annahme, daß der Wert von m entscheidend für die Tatsache ist, daß die erfindungsgemäß zu verwendenden Blockmischpolymerisate zwar ausgezeichnete Antischaummittel sind, gleichzeitig aber keine Benetzungsfehler beim Auftrag Entschäumer enthaltender Dispersionen von Binde-, Beschichtungs- oder Klebmitteln verursachen.

Entsprechend dem Stand der Technik ist es möglich, den erfindungsgemäß zu verwendenden Polyoxyalkylen-Polysiloxan-Blockmischpolymerisaten, bezogen auf diese, bis zu 20 Gew.-% anorganische oder organische feinteilige Feststoffe zuzusetzen. Beispiele anorganischer Feststoffe sind gegebenenfalls hydrophobierte Kieselsäure, Aluminiumoxid, Erdalkalicarbonate oder ähnliche aus dem Stand der Technik bekannte und übliche feinteilige Feststoffe. Als organische feinteilige Substanzen können die für diesen Zweck bekannten Erdalkalisalze von langkettigen Fettsäuren mit 12 bis 22 Kohlenstoffatomen oder die Amide dieser Fettsäuren verwendet werden. Weitere geeignete organische Feststoffe sind Derivate des Harnstoffs, die durch Umsetzung von Isocyanaten mit Aminen erhalten werden können.

Die erfindungsgemäß zu verwendenden Blockmischpolymerisate können als solche oder in Form wäßriger Dispersionen verwendet werden. Dabei ist die Verwendung von Dispersionen aufgrund der besseren Dosierungsmöglichkeiten bevorzugt. Man verwendet insbesondere wäßrige Dispersionen mit einem Gehalt von 5 bis 50 Gew.-% Blockmischpolymerisaten.

Man verwendet die Entschäumer beim erfindungsgemäßen Verfahren in Mengen von 0,01 bis 2 Gew.-%, bezogen auf zu entschäumende Dispersion, insbesondere in Mengen von 0,1 bis 1 Gew.-%.

Beispiele von bei dem erfindungsgemäßen Verfahren zu verwendenden und besonders geeigneten Polyoxyalkylen-Polysiloxan-Blockmischpolymerisaten sind

$$HO(C_2H_4O)_4(C_3H_6O)_{16}\left[(\underset{CH_3}{\overset{CH_3}{Si}}-O)_{50}(C_3H_6O)_{16}(C_2H_4O)_4\right]_4 H$$

$$HO(C_2H_4O)_{30}(C_4H_8O)_{70}\left[(\underset{CH_3}{\overset{CH_3}{Si}}-O)_{15}(C_4H_8O)_{70}(C_2H_4O)_{30}\right]_{10} H$$

$$HO(C_3H_6O)_{35}\left[(\underset{CH_3}{\overset{CH_3}{Si}}-O)_{25}(C_3H_6O)_{35}\right]_8 H$$

$$C_4H_9O(C_2H_4O)_4(C_3H_6O)_{36}\left[(\underset{CH_3}{\overset{CH_3}{Si}}-O)_{25}(C_3H_6O)_{36}(C_2H_4O)_4\right]_{15} C_4H_9$$

$$HO(C_3H_6O)_{35}(C_4H_8O)_{15}\left[(\underset{CH_3}{\overset{CH_3}{Si}}-O)_{80}(C_4H_8O)_{15}(C_3H_6O)_{35}\right]_4 H$$

In den folgenden Beispielen werden die anwendungstechnischen Eigenschaften der erfindungsgemäß zu verwendenden Polyoxyalkylen-Polysiloxan-Blockmischpolymerisate noch näher erläutert und mit den Eigenschaften von Produkten des Standes der Technik verglichen.

Herstellung erfindungsgemäß zu verwendender Polymerisate

In einem 2-l-Dreihalskolben mit Rührer, Destillationsbrücke und Gaseinleitungsrohr werden 712 g eines Polyoxyalkylens (A) (OHZ = 50, n = 2,9) vorgelegt und mit der gleichen Menge Toluol versetzt. Nach dem Abdestillieren von ca. 200 g Toluol zur azeotropen Trocknung des Polyoxyalkylens wird auf 75 °C

abgekühlt, die Destillationsbrücke gegen einen Tropftrichter ausgetauscht und innerhalb von 30 Minuten 288 g eines $\alpha,\omega$-Dichlordimethylpolysiloxans (B) (x = 15) zugetropft. Nach einer Nachreaktionszeit von 1 h bei 80 °C wird mit Ammoniak neutralisiert, vom Ammoniumchlorid filtriert und vom Lösemittel befreit.

Das erhaltene Reaktionsprodukt entspricht der allgemeinen Formel

$HO\text{-}A\text{-}[BA]_4H$ I

In analoger Weise werden die Produkte

$HO\text{-}A\text{-}[BA]_8H$ II

$HO\text{-}A\text{-}[BA]_{10}H$ III

$HO\text{-}A\text{-}[BA]_{15}H$ IV

hergestellt.

Die Produkte I bis IV werden ohne zusätzliche disperse Kieselsäure unter Verwendung von nichtionogenen Emulgatoren (Polyoxyethylenfettalkoholether, Polyoxyethylenfettsäuretriglycerid eines HLB-Wertes von 13) in eine 20 %ige wäßrige Dispersion überführt.

Prüfung erfindungsgemäß zu verwendender Polymerisate

Zur Prüfung der entschäumenden Wirkung der erfindungsgemäß zu verwendenden Produkte im Vergleich zu Produkten des Standes der Technik wird ein Rührtest durchgeführt. Dazu werden 100 g einer zu entschäumenden Polymerdispersion in ein 250-ml-Becherglas eingewogen und bei 2500 U/min mit einer oben abgedeckten Turbine 1 min lang gerührt. Unmittelbar nach Beendigung des Rührens werden 50 ml der Polymerdispersion in einen geeichten Meßkolben überführt und ausgewogen. Danach kann gemäß

$$\text{Vol-\% Luft} = 100 - \frac{2 \cdot G_R}{\gamma}$$

($G_R$ = Gewicht der gerührten Polymerdispersion, $\gamma$ = Dichte der ungerührten Polymerdispersion) das aufgenommene Luftvolumen berechnet werden. Zusätzlich wird die entschäumerhaltige und gerührte Polymerdispersion in einer Schichtdicke von 200 µm (naß) auf eine PVC-Folie aufgerakelt. Der getrocknete Polymerfilm wird auf Benetzungsfehler beurteilt.

Die zur Überprüfung der erfindungsgemäß zu verwendenden Produkte benutzten Polymerdispersionen A bis N des Standes der Technik (handelsüblich) basieren auf Polyurethanen und finden Verwendung als Kleber, Textil- und Lederbeschichtungen sowie als Bindemittel. Für die Überprüfung werden jeweils 0,1 % der erfindungsgemäßen Polymerisate eingesetzt.

Entschäumer (nicht erfindungsgemäß)

| Polymer-dispersion | ohne Entschäumer | | Vergleich 1 gemäß DE-A-24 43 853 | | Vergleich 2 gemäß US-A-4 028 218 | | Vergleich 3 gemäß DE-A-31 23 103 | |
|---|---|---|---|---|---|---|---|---|
| | Vol-% Luft | Benetzungs-fehler | Vol-% Luft | Benetzungs-fehler | Vol-% Luft | Benetzungs-fehler | Vol-% Luft | Benetzungs-fehler |
| A | 34,5 | keine | 2,1 | starke | 2,5 | starke | 18,0 | starke |
| B | 30,7 | keine | 2,5 | starke | 5,9 | vereinzelte | 6,8 | starke |
| C | 12,4 | keine | 0,2 | starke | 2,3 | starke | 7,0 | starke |
| D | 13,5 | keine | 0,8 | starke | 3,7 | starke | 6,7 | starke |
| E | 11,2 | keine | 0,7 | starke | 1,5 | starke | 2,9 | starke |
| F | 28,0 | keine | 1,8 | starke | 18,6 | starke | 17,5 | keine |
| G | 21,5 | keine | 1,6 | starke | 3,5 | starke | 4,3 | starke |
| H | 9,1 | keine | 1,0 | starke | 4,1 | keine | 1,9 | starke |
| K | 15,7 | keine | 1,3 | starke | 4,4 | starke | 3,4 | starke |
| L | 24,6 | keine | 3,1 | starke | 18,1 | starke | 9,0 | vereinzelte |
| M | 41,2 | keine | 2,4 | starke | 12,9 | starke | 10,2 | starke |
| N | 18,6 | keine | 2,3 | starke | 5,8 | starke | 8,1 | starke |

Entschäumer (erfindungsgemäß)

| Polymer-dispersion | I Vol-% Luft | I Benetzungsfehler | II Vol-% Luft | II Benetzungsfehler | III Vol-% Luft | III Benetzungsfehler | IV Vol-% Luft | IV Benetzungsfehler |
|---|---|---|---|---|---|---|---|---|
| A | 2,7 | keine | 1,9 | keine | 2,0 | keine | 2,6 | keine |
| B | 3,4 | keine | 1,8 | keine | 2,7 | keine | 2,2 | keine |
| C | 0,6 | keine | 0,7 | keine | 0,5 | keine | 0,6 | keine |
| D | 0,6 | keine | 0,8 | keine | 0,9 | keine | 0,8 | keine |
| E | 0,1 | keine | 0,2 | keine | 0,1 | keine | 0,1 | keine |
| F | 3,0 | keine | 2,6 | keine | 2,9 | keine | 2,7 | keine |
| G | 2,3 | keine | 2,1 | keine | 2,1 | keine | 2,0 | keine |
| H | 1,5 | keine | 1,7 | keine | 1,6 | keine | 1,7 | keine |
| K | 1,9 | keine | 1,9 | keine | 1,5 | keine | 1,8 | keine |
| L | 2,5 | keine | 2,3 | keine | 2,7 | keine | 2,8 | keine |
| M | 3,4 | keine | 3,1 | keine | 3,0 | keine | 2,9 | keine |
| N | 1,9 | keine | 2,0 | keine | 2,1 | keine | 2,1 | keine |

## Patentansprüche

1. Verfahren zum Entschäumen von wäßrigen Dispersionen polymerer organischer Substanzen, insbesondere Dispersionen von Binde-, Beschichtungs- und Klebmitteln, durch Zusatz von Polyoxyalkylen-Polysiloxan-Blockmischpolymerisaten, dadurch gekennzeichnet, daß man als Polyoxyalkylen-Polysiloxan-Blockmischpolymerisate solche der allgemeinen Formel

$R^1O\text{-}A\text{-}[B\text{-}A\text{-}]_mR^1$

wobei

A ein Polyoxyalkylenblock der durchschnittlichen Formel $(C_nH_{2n}O\text{-})_y$ ist, in der n einen Wert von 2,8 bis 4,0 und y einen Wert von 15 bis 100 hat,

B ein Polysiloxanblock der durchschnittlichen Formel

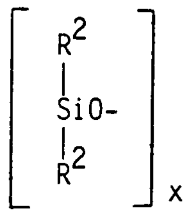

ist, wobei $R^2$ gleich oder verschieden ist und einen Alkylrest mit 1 bis 4 Kohlenstoffatomen oder einen Phenylrest bedeutet, jedoch mindestens 90 % der Reste $R^2$ Methylreste sind und x einen Wert von 10 bis 100 hat,

$R^1$ gleich oder verschieden ist und einen Wasserstoff- oder Alkylrest mit 1 bis 4 Kohlenstoffatomen bedeutet und

m einen Wert von 4 bis 20 hat, in Mengen von 0,01 bis 2,0 Gew.-%, bezogen auf zu entschäumende Dispersion, verwendet.

**2.** Verfahren nach Anspruch 1, dadurch gekennzeichnet, daß man Polyoxyalkylen-Polysiloxan-Blockmischpolymerisate verwendet, deren Reste und Indices einzeln oder in Kombination folgende Bedeutung haben:
$R^1$ = Wasserstoffrest,
$R^2$ = Methylrest,
n = 2,8 bis 3,5,
m = 4 bis 15,
x = 15 bis 70.

**3.** Verfahren nach Anspruch 1 oder 2, dadurch gekennzeichnet, daß man Polyoxyalkylen-Polysiloxan-Blockmischpolymerisate verwendet, deren unterschiedliche Oxyalkyleneinheiten mit n = 2,3 oder 4 in den Polyoxyalkylenblöcken blockweise angeordnet sind.

**4.** Verfahren nach Anspruch 1, 2 oder 3, dadurch gekennzeichnet, daß man Polyoxyalkylen-Polysiloxan-Blockmischpolymerisate im Gemisch mit, bezogen auf Blockmischpolymerisate, bis zu 20 Gew.-% anorganischen oder organischen feinteiligen Feststoffen verwendet.

**5.** Verfahren nach einem oder mehreren der vorhergehenden Ansprüche, dadurch gekennzeichnet, daß man die Polyoxyalkylen-Polysiloxan-Blockmischpolymerisate in Form wäßriger Dispersionen verwendet.

## Claims

**1.** Process for defoaming aqueous dispersions of polymer organic substances, in particular dispersions of binders, coating agents and adhesives, by the addition of polyoxyalkylene/polysiloxane block copolymers, characterised in that the polyoxyalkylene/polysiloxane block copolymers used are those of the general formula

$R^1O\text{-}A\text{-}[\ B\text{-}A\text{-}\ ]_mR^1$

in which

A is a polyoxyalkylene block having the average formula $(C_nH_{2n}O\text{-})_y$ in which n has a value from 2.8 to 4.0 and y has a value from 15 to 100,

B is a polysiloxane block having the average formula

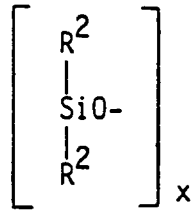

in which $R^2$ are identical or different and denote an alkyl radical having 1 to 4 carbon atoms or a phenyl radical, but at least 90% of the radicals $R^2$ are methyl radicals and x has a value from 10 to 100,

$R^1$ are identical or different and denote a hydrogen or alkyl radical having 1 to 4 carbon atoms and

m has a value from 4 to 20,

in amounts of 0.01 to 2.0% by weight, based on the dispersion to be defoamed.

**2.** Process according to Claim 1, characterised in that polyoxyalkylene/polysiloxane block copolymers are used in which the radicals and indices on their own or in combination have the following meaning:

$R^1$ = Hydrogen radical,
$R^2$ = Methyl radical,
n = 2.8 to 3.5,
m = 4 to 15,
x = 15 to 70.

**3.** Process according to Claim 1 or 2, characterised in that polyoxyalkylene/polysiloxane block copolymers are used in which the various oxyalkylene units where n = 2, 3 or 4 are arranged blockwise in the polyoxyalkylene blocks.

**4.** Process according to Claim 1, 2 or 3, characterised in that polyoxyalkylene/polysiloxane block copolymers are used in a mixture with, based on the block copolymers, up to 20% by weight of inorganic or organic finely divided solids.

**5.** Process according to one or more of the preceding claims, characterised in that the polyoxyalkylene/polysiloxane block copolymers are used in the form of aqueous dispersions.

**Revendications**

**1.** Procédé pour éliminer la mousse dans des dispersions aqueuses de substances organiques polymères, notamment des dispersions de liants, d'agents de revêtement et de colles, grâce à l'addition de copolymères en masse de polyoxyalcoylène-polysiloxane, caractérisé en ce qu'on utilise comme copolymères en masse de polyoxyalcoylène-polysiloxane, ceux qui répondent à la formule générale

$R^1O\text{-}A\text{-}[B\text{-}A\text{-}]_mR^1$

dans laquelle

A est une séquence polyoxyalcoylène répondant à la formule moyenne $(C_nH_{2n}O\text{-})_y$, dans laquelle n vaut de 2,8 à 4,0 et y vaut de 15 à 100,

B est une séquence polysiloxane répondant à la formule moyenne

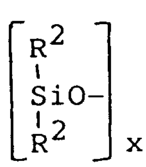

où $R^2$ sont identiques ou différents et signifient un reste alcoyle comportant 1 à 4 atomes de carbone ou un reste phényle, mais au moins 90 % des restes $R^2$ sont des restes méthyles, et x vaut de 10 à 100,

$R^1$ sont identiques ou différents et signifient un reste d'hydrogène ou un reste alcoyle comportant 1 à 4 atomes de carbone, et

m vaut de 4 à 20,

à raison de 0,01 à 2,0 % en poids par rapport à la dispersion à écumer.

**2.** Procédé selon la revendication 1, caractérisé en ce qu'on utilise des copolymères en masse de polyoxyalcoylène-polysiloxane dont les restes et indices individuels ou combinés ont la signification suivante :
$R^1$ = reste d'hydrogène,
$R^2$ = reste méthyle,
n = 2,8 à 3,5
m = 4 à 15,
x = 15 à 70.

**3.** Procédé selon la revendication 1 ou 2, caractérisé en ce qu'on utilise des copolymères en masse de polyoxyalcoylène-polysiloxane dont les différentes unités oxyalcoylène avec n = 2, 3 ou 4 sont disposées de manière séquencée dans les séquences polyoxyalcoylène.

**4.** Procédé selon la revendication 1, 2 ou 3, caractérisé en ce qu on utilise des copolymères en masse de polyoxyalcoylène-polysiloxane mélangés avec jusqu'à 20 % en poids, par rapport aux copolymères en masse, de substances solides inorganiques ou organiques finement divisées.

**5.** Procécé selon une ou plusieurs des revendications précédentes, caractérisé en ce qu'on utilise les copolymères en masse de polyoxyalcoylène-polysiloxane sous la forme de dispersions aqueuses.